Europäisches Patentamt

European Patent Office

Office européen des brevets

(19)

(11) Numéro de publication : **0 349 401 B1**

(12) **FASCICULE DE BREVET EUROPEEN**

(45) Date de publication du fascicule du brevet :
**31.03.93 Bulletin 93/13**

(51) Int. Cl.$^5$ : **C01F 17/00**

(21) Numéro de dépôt : **89401800.1**

(22) Date de dépôt : **26.06.89**

(54) **Trifluorure de terre rare à nouvelles caractéristiques morphologiques et son procédé d'obtention.**

(30) Priorité : **01.07.88 FR 8808909**

(43) Date de publication de la demande :
**03.01.90 Bulletin 90/01**

(45) Mention de la délivrance du brevet :
**31.03.93 Bulletin 93/13**

(84) Etats contractants désignés :
**AT BE CH DE ES FR GB GR IT LI LU NL SE**

(56) Documents cités :
**EP-A- 0 156 617**
**J. PHYS. CHEM. SOLIDS, vol. 26, 1965, pages 1625-1628, Pergamon Press, GB; S. KERN et al.: "Preparation and paramagnetism of the rare earth trifluorides"**
**H. BERGMANN: "Gmelin Handbuch der Anorganischen Chemie", édition 8, systeme no. 39, partie 3C, 1976, pages 33-35,168-169, Springer-Verlag, Berlin, DE**

(73) Titulaire : **RHONE-POULENC CHIMIE**
**25, quai Paul Doumer**
**F-92408 Courbevoie Cédex (FR)**

(72) Inventeur : **Dissaux, Antoine**
**1, rue des Sureaux**
**F-17139 - Chagnolet (FR)**
Inventeur : **Le Loarer, Jean-Luc**
**24, rue du Général Guillaumat**
**F-17000 - La Rochelle (FR)**

(74) Mandataire : **Esson, Jean-Pierre et al**
**RHONE-POULENC CHIMIE Service Brevets**
**Chimie 25, quai Paul Doumer**
**F-92408 Courbevoie Cedex (FR)**

## Description

La présente invention a trait à des trifluorures de terres rares à nouvelles caractéristiques morphologiques. Elle concerne également le procédé d'obtention desdits fluorures. Plus précisément, elle vise l'obtention d'un trifluorure de terre rare à granulométrie contrôlée.

Il existe diverses voies d'accès aux fluorures de terres rares.

Il est connu de les préparer par action d'une solution aqueuse d'acide fluorhydrique sur une solution d'un sel de terre rare : carbonate ou oxalate de terre rare (voir C.A., vol. 92, réf. 103422t) ou par action d'une solution aqueuse de fluorure de sodium sur une solution de nitrate de terre rare (voir C.A., vol. 92, réf. 87192K).

Dans "J. Phys. Chem. Solids, Pergamon Press 1965, vol.26, pp. 1625-1628, Preparation and paramagnetism of the rare earth trifluorides", il est également décrit un procédé de fabrication de fluorures de terres rares consistant à faire réagir un chlorure de terre rare avec un large excés de fluorure d'ammonium, à récupérer le précipité obtenu, à le sécher, puis à le mélanger à nouveau avec une grande quantité de fluorure d'ammonium solide, et enfin à calciner à 360°C le mélange de poudres ainsi obtenu.

Toutefois, de telles voies de synthèse utilisées pour la préparation de trifluorure de terre rare conduisent à un produit présentant une taille de grains grossière, et même en le soumettant à une opération de broyage, il n'est pas possible d'obtenir une taille de particules inférieure à un micromètre.

Un des objectifs de la présente invention est de fournir un fluorure de terre rare présentant une granulométrie fine.

Un autre objectif est de fournir un fluorure de terre rare présentant une granulométrie fine et resserrée autour du diamètre moyen.

Enfin, un dernier objectif est de disposer d'un procédé permetant d'accéder facilement audit fluorure.

Il a maintenant été trouvé et c'est ce qui constitue un des objets de la présente invention, un trifluorure de terre rare ayant des caractéristiques particulières de granulométrie caractérisé par le fait qu'il se présente sous forme d'agrégats dont le diamètre moyen est inférieur à 1,00 μm, avantageusement compris entre 0,10 et 0,50 μm, et qu'il possède une répartition granulométrique monodisperse et resserrée.

On définit le diamètre moyen comme étant un diamètre tel que 50 % en poids des agrégats ont un diamètre supérieur ou inférieur au diamètre moyen.

Le trifluorure de terre rare de l'invention présente une granulométrie fine : le diamètre moyen des agrégats est inférieur à 1,00 μm et varie avantageusement entre 0,10 μm et 0,50 μm et, de préférence, entre 0,15 μm et 0,30 μm.

Le diamètre moyen des agrégats est souvent fonction de la nature de la terre rare et notamment la taille de l'atome de terre rare et/ou la solubilité de ses sels semblent avoir une influence sur le diamètre moyen des agrégats. Cette remarque doit être considérée uniquement à titre indicatif et n'apporte aucune limitation à l'invention.

Ainsi à titre d'exemple, pour le trifluorure de cérium le diamètre moyen des agrégats varie entre 0,10 μm et 0,50 μm.

Tous les résultats d'analyses granulométriques donnés dans la présente demande sont déterminés selon une méthode de sédimentation précisée ci-après.

Le caractère monodisperse de la distribution de la taille des agrégats est mis en évidence par l'indice de dispersion défini par le rapport $\frac{d_{84} - d_{16}}{2d_{50}}$.

Cet indice est inférieur ou égal à 0,8 environ, de préférence compris entre 0,3 et 0,6, plus avantageusement entre 0,3 et 0,45.

Il est remarquable d'obtenir un trifluorure de terre rare aussi fin et monodisperse.

L'analyse par diffraction X montre que le fluorure de terre rare obtenu pour les terres rares comprises entre le lanthane et le néodyme est un produit cristallisé qui présente une phase cristalline de type hexagonale ayant des paramètres de maille dans le cas du fluorure de cérium de : a = 0,711 nm et c = 0,728 nm. C'est un produit bien cristallisé. A titre indicatif, on précisera que dans la partie cristallisée, la taille des cristallites d'un fluorure de cérium obtenu après traitement à 400 °C est supérieure à 50 nm.

La taille des agrégats des fluorures de terres rares de l'invention s'échelonne avantageusement entre 0,05 μm et 2,0 μm environ. Dans une réalisation préférée de l'invention, la fraction granulométrique supérieure à 1 μm est inférieure à 10 % en poids et la fraction granulométrique supérieure à 2 μm est inférieure à 0,5 % en poids.

L'expression "terres rares" (TR) utilisée conformément à l'invention comprend les éléments terres rares appelés lanthanides ayant des numéros atomiques de 57 à 71 inclus et l'yttrium de numéro atomique égal à 39. De plus, on désigne par "terres rares cériques", les éléments les plus légers commençant avec le lanthane et s'étendant au samarium conformément au numéro atomique et par "terres rares yttriques", les éléments les plus lourds des terres rates commençant par l'europium et finissant par le lutécium et comprenant l'yttrium.

Les fluorures de cérium, de lanthane, de néodyme et de dysprosium sont les composés les plus utilisés actuellement.

Par microscopie électronique à balayage et transmission, on met en évidence les agrégats et leur constitution d'une à plusieurs cristallites élémentaires, le plus souvent en un nombre inférieur à 4.

Un autre objet de la présente invention est le procédé d'obtention dudit fluorure de terre rare caractérisé par le fait que l'on fait réagir une solution aqueuse de sel de terre rare avec une solution de fluorure d'ammonium, que l'on sépare le précipité formé et qu'on le soumet à un traitement thermique.

Le sel de terre rare mis en oeuvre selon le procédé de l'invention peut être tout sel de terre rare soluble dans les conditions de l'invention.

On peut également utiliser un mélange de sels de terre rare.

Comme exemples de sels de terre rare susceptibles d'être employés, on peut citer les nitrates, les chlorures et/ou les sulfates sous forme solide ou sous forme de solution aqueuse.

D'une manière préférentielle, on fait appel au nitrate de terre rare.

Le sel de terre rare est choisi de telle sorte qu'il ne contienne pas d'impuretés qui puissent se retrouver dans le produit final. Il peut être avantageux de mettre en jeu un sel de terre rare présentant un degré de pureté supérieur à 99 %.

La concentration de la solution de sel de terre rare n'est pas un facteur critique, selon l'invention, et peut varier dans de larges limites ; une concentration exprimée en cation métallique comprise entre 0,1 et 3 moles par litre est préférée.

Quant à l'agent de fluoration, on fait appel au fluorure d'ammonium sous forme solide ou en solution aqueuse.

Il sera également d'une bonne pureté de l'ordre de 99 % et plus.

Il est possible de le mettre en oeuvre sous forme d'une solution à raison de 1 à 5 moles/litre.

La quantité de fluorure d'ammonium mise en jeu est telle que le rapport molaire $NH_4F$/sel de terre rare varie entre 3,0 et 3,6.

La réaction peut être effectuée à une température comprise entre 20 et 90°C. Avantageusement, une température choisie entre 60 et 90°C permet de contrôler parfaitement la granulométrie obtenue.

Un mode de réalisation pratique de l'invention consiste à ajouter progressivement une solution de fluorure d'ammonium dans la solution de sel de terre rare ou inversement.

La durée de cette addition peut varier, de préférence, entre 30 minutes et 2 heures.

On peut ajouter la solution de fluorure d'ammonium progressivement dans la solution de sel de terre rare portée au préalable à la température réactionnelle ou inversement.

On peut également ajouter progressivement à froid, la solution de fluorure d'ammonium dans la solution de sel de terre rare ou inversement puis porter le mélange à la température réactionnelle choisie.

Il est possible de parfaire la précipitation en réalisant un mûrissement du précipité. Cette opération n'est pas obligatoire. A cet effet, on maintient à la température réactionnelle choisie, le milieu réactionnel, sous agitation. La durée du mûrissement peut être très variable. Généralement, la durée est inférieure à 2 heures et, de préférence, comprise entre 30 minutes et 1 heure.

La deuxième étape du procédé consiste à séparer le précipité obtenu. Le précipité formé peut être séparé par les techniques courantes de séparation solide-liquide : décantation, filtration, essorage, centrifugation.

Dans une dernière étape du procédé de l'invention, on récupère le trifluorure de terre rare.

Une première variante consiste à soumettre le précipité à une opération de lavage suivie d'une étape de séchage.

On effectue le lavage du précipité, de préférence à l'eau, afin d'éliminer le fluorure d'ammonium en excès et le sel d'ammonium formé à partir de l'anion provenant du sel de terre rare de départ.

On peut ensuite sécher le précipité afin d'éliminer l'eau d'imprégnation. On peut effectuer le séchage à l'air ou sous pression réduite de l'ordre de $10^{-2}$ à 100 mm de mercure (1,33 à $1,33.10^4$ Pa).

La température de séchage peut varier entre la température ambiante (le plus souvent entre 15°C et 25°C) et 250°C.

La durée de séchage est fonction de la température : elle n'est pas critique et peut être comprise entre 30 minutes et 24 heures mais est choisie, de préférence, entre 2 heures et 8 heures.

Une autre variante d'exécution de l'invention consiste à soumettre le précipité séparé à un traitement thermique à une température supérieure à 250°C afin d'éliminer directement les sels d'imprégnation du précipité.

L'opération est effectuée à une température comprise entre environ 250°C et environ 700°C, de préférence, entre 400°C et 500°C.

La durée dudit traitement n'est pas critique et est choisie le plus souvent entre 30 minutes et 6 heures.

EP 0 349 401 B1

Il est également possible de faire précéder ce traitement thermique par une opération de séchage telle que définie ci-dessus.

Dans certains cas, en particulier lorsque la température du traitement thermique est supérieure à 120°C, il est souhaitable d'effectuer une opération de désagglomération afin d'individualiser les agrégats de fluorure de terre rare.

Cette opération est effectuée, de préférence, dans un microniseur à jet d'air mais il est possible de la faire dans un broyeur classique du type broyeur à billes, à boulets ou à anneaux. Cette opération peut être très courte dans le cas où elle est faite dans un broyeur en continu du type broyeur à jet d'air correspondant au temps de passage du produit ou d'une durée pouvant atteindre 30 minutes, dans un broyeur classique.

Conformément au procédé de l'invention, on obtient un fluorure de terre rare présentant une granulométrie fine et resserrée.

Il est surprenant de noter qu'elle est liée à la granulométrie du précipité obtenu à l'étape de fluoration et que ce précipité présente également une granulométrie fine, contrairement aux précipités obtenus par certaines méthodes classiques de précipitation comme cela est mis en évidence dans les essais comparatifs A à C donnés ci-après.

En raison de sa morphologie contrôlée, le trifluorure de terre rare de l'invention est particulièrement bien adapté à sa mise en oeuvre dans le domaine de la métallurgie et de la lubrification.

Les exemples qui suivent, illustrent l'invention, sans toutefois la limiter.

Dans les exemples, les pourcentages donnés sont exprimés en poids.

Avant de détailler les exemples, on précisera que l'analyse granulométrique est effectuée à l'aide de l'instrument SEDIGRAPH 5000D.

Cet appareil mesure le taux de sédimentation des particules en suspension et présente automatiquement ces résultats en une distribution en pourcentages cumulatifs en fonction des diamètres équivalents sphériques (basée sur la loi de Stokes).

L'appareil détermine, par le truchement d'un faisceau de rayons X très fin, la concentration en particules retenues en suspension à différentes hauteurs de sédimentation, comme une fonction du temps. Le logarithme de l'intensité du rayon X est électroniquement généré et enregistré puis présenté linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l'axe des X de l'enregistreur, pour indiquer directement le diamètre équivalent sphérique correspondant au temps écoulé à une profondeur de sédimentation donnée, l'information de la dimension est présentée sur une feuille logarithmique à 3 décades.

Pour chaque poudre de trifluorure de terre rare, on détermine $d_{50}$, $d_{16}$, $d_{84}$, ce qui permet de calculer l'indice de dispersion défini ci-dessus.

Exemple 1

Dans un réacteur de deux litres à double enveloppe dans laquelle circule de l'eau thermorégulée à 80°C, équipé d'un système d'introduction de réactifs et d'un dispositif d'agitation, on introduit 1000 cm³ d'une solution aqueuse de nitrate céreux ayant une concentration exprimée en $CeO_2$ de 220 g/l.

Lorsque la solution a atteint la température de 80°C, on introduit, sous agitation, 1067 cm³ d'une solution aqueuse de fluorure d'ammonium contenant 150 g/l de $NH_4F$, à un débit de 533,5 cm³/heure.

On maintient une agitation de 200 tours/minute pendant toute la durée de la précipitation.

En fin de précipitation, on ajuste le pH à 4 à l'aide d'une solution aqueuse d'ammoniaque 3 N.

On maintient le milieu réactionnel à 80°C et sous agitation pendant 30 minutes.

On sépare le précipité sur Büchner et l'on essore bien le gâteau de filtration.

On obtient 360 g d'un précipité de fluorure de terre rare humide contenant 70 % en poids de fluorure de cérium exprimés en matières sèches.

Il présente un diamètre moyen d'agrégats de 0,12 μm et moins de 0,5 % d'agrégats de diamètre supérieur à 1 μm.

On soumet ensuite le précipité à un traitement thermique à 450°C, pendant 2 heures.

Après refroidissement, on lui fait subir une opération de désagglomération des agrégats dans un appareil de micronisation à jet d'air ayant un diamètre de 100 mm, à un débit de 200 g/heure avec une pression d'air de 5 Bars ($10^5$ Pa).

On recueille 252 g de trifluorure de cérium ayant les caractéristiques morphologiques suivantes :
- diamètre moyen des agrégats : 0,18 μm
- % d'agrégats de diamètre moyen supérieur à 1 μm : 4 %

4

- indice de dispersion : 0,45

Exemples 2 à 4 et exemple comparatif 5

Dans la série d'essais qui suit, on reproduit l'exemple 1, sauf en ce qui concerne la température du traitement qui varie entre 120°C et 450°C. De plus, on supprime le traitement de désagglomération des agrégats. On consigne les résultats obtenus dans le tableau I ci-après :

Tableau I

| n° exemple | Température du traitement thermique °C | Diamètre moyen des agrégats (μm) | % supérieurs à 1 μm |
|---|---|---|---|
| 2 | 120 | 0,14 | 9 |
| 3 | 200 | 0,19 | 16 |
| 4 | 300 | 0,19 | 29 |
| 5 (comp.) | 400 | 0,30 | 43 |

On note que le trifluorure de cérium présente un diamètre moyen des agrégats plus grand et un pourcentage d'agrégats supérieur à 1 μm, plus grand lorsque la température du traitement augmente.

Exemple 6

On reproduit l'exemple 5, à la différence près que l'on soumet le précipité récupéré après traitement thermique à une opération de désagglomération des agrégats dans un appareil de micronisation à jet d'air.
On recueille un trifluorure de cérium ayant les caractéristiques morphologiques suivantes :
- diamètre moyen des agrégats : 0,28 μm
- % d'agrégats de diamètre moyen supérieur à 1 μm : < 0,5 %
- indice de dispersion : 0,30

Exemples 7 à 10

L'exemple 1 est reproduit mais en utilisant comme solution aqueuse de nitrate de terre rare des nitrates de dysprosium, de lanthane, de néodyme.
Les résultats obtenus sont rassemblés dans le tableau ci-dessous.

| EX | NITRATE DE TR | CARACTERISTIQUES DE FLUORURE DE TR | | |
|---|---|---|---|---|
| | | $\emptyset$ 50 | % > 1μm | INDICE DE DISPERSION |
| 7 | $Ce(NO_3)_3$ | 0,25 | < 5% | 0,4 |
| 8 | $Dy(NO_3)_3$ | 0,35 | 7,8 % | 0,80 |
| 9 | $La(NO_3)_3$ | 0,16 | 4 % | 0,55 |
| 10 | $Nd(NO_3)_3$ | 0,21 | 0 % | 0,41 |

On donne, ci-après, trois essais comparatifs qui mettent en évidence que des méthodes classiques de préparation de trifluorure de cérium ne conduisent pas à un produit à granulométrie fine et resserrée.

Essais A à C

Essai A

Dans un bécher en polytétrafluoroéthylène de 2 litres, on charge 285 cm³ d'une solution aqueuse d'acide fluorhydrique à 40 % en poids et 193 cm³ d'eau désionisée.

On introduit sous agitation et pendant 30 minutes 1120 cm³ d'une suspension aqueuse de carbonate de cérium contenant 580 g de carbonate de cérium ayant une concentration exprimée en $CeO_2$ de 55,2 %.

On maintient le milieu réactionnel sous agitation, pendant 30 minutes.

On sépare le précipité sur Büchner et l'on essore bien le gâteau de filtration.

On obtient un précipité présentant des agrégats dont le diamètre moyen est de 0,27 $\mu$m et dont 35 % des agrégats ont un diamètre supérieur à 1 $\mu$m.

On soumet ensuite le précipité à un traitement thermique à 450°C, pendant 2 heures.

Après refroidissement, on lui fait subir une opération de désagglomération des agrégats.

On obtient 366 g d'un trifluorure de cérium ayant les caractéristiques morphologiques suivantes :
- diamètre moyen des agrégats : 0,74 $\mu$m
- % d'agrégats de diamètre moyen supérieur à 1 $\mu$m : 40 %
- indice de dispersion : 1,3

Essai B

Dans un réacteur tel que décrit dans l'exemple 1, on charge 455 cm³ d'une solution aqueuse de fluorure de sodium contenant 257,5 g de NaF.

Lorsque la solution a atteint la température de 70°C, on introduit, sous agitation, 633 cm³ d'une solution aqueuse de nitrate céreux ayant une concentration exprimée en $CeO_2$ de 505 g/l.

On maintient le milieu réactionnel, sous agitation, pendant 30 minutes.

On sépare le précipité sur Büchner et l'on essore bien le gâteau de filtration.

On obtient un précipité présentant des agrégats dont le diamètre moyen est de 1,1 $\mu$m et dont 53 % des agrégats ont un diamètre supérieur à 1 $\mu$m.

On soumet ensuite le précipité à un traitement thermique à 450°C pendant 2 heures.

Après refroidissement, on lui fait subir une opération de désagglomération des agrégats.

On obtient 366 g d'un trifluorure de cérium ayant les caractéristiques suivantes :
- diamètre moyen des agrégats : 1,1 $\mu$m
- % d'agrégats de diamètre moyen supérieur à 1 $\mu$m : 52 %
- indice de dispersion : 1,05

Essai C

Dans un bécher en polytétrafluoroéthylène de 2 litres, on charge 285 cm³ d'une solution aqueuse d'acide fluorhydrique à 40 % en poids et 193 cm³ d'eau désionisée.

On introduit sous agitation et pendant 30 minutes 1120 cm³ d'une suspension aqueuse d'oxalate de cérium contenant 576 g d'oxalate de cérium ayant une concentration exprimée en $CeO_2$ de 55,5 %.

On maintient le milieu réactionnel sous agitation, pendant 30 minutes.

On sépare le précipité sur Büchner et l'on essore bien le gâteau de filtration.

On obtient un précipité présentant des agrégats dont le diamètre moyen est de 0,15 $\mu$m et dont 28 % des agrégats ont un diamètre supérieur à 1 $\mu$m.

On soumet ensuite le précipité à un traitement thermique à 450°C, pendant 2 heures.

Après refroidissement, on lui fait subir une opération de désagglomération des agrégats.

On obtient 366 g d'un trifluorure de cérium ayant les caractéristiques morphologiques suivantes :
- diamètre moyen des agrégats : 1,3 $\mu$m
- % d'agrégats de diamètre moyen supérieur à 1 $\mu$m : 55 %
- indice de dispersion : 1,2

**Revendications**

1. Trifluorure de terre rare caractérisé par le fait qu'il se présente sous forme d'agrégats dont le diamètre moyen est inférieur à 1μm et qu'il possède un indice de dispersion, défini par le rapport $\frac{d_{84} - d_{16}}{2d_{50}}$, inférieur ou égal 0,8.

2. Trifluorure de terre rare selon la revendication 1 caractérisé par le fait que le diamètre moyen des agrégats varies entre 0,10 μm et 0,50 μm, de préférence entre 0,15 μm et 0,30 μm.

3. Trifluorure de terre rare selon l'une des revendications 1 et 2 caractérisé par le fait que la taille des agrégats s'échelonne entre 0,05 μm et 2,0 μm.

4. Trifluorure de terre rare selon l'une des revendications 1 à 3 caractérisé par le fait que la fraction granulométrique supérieure à 1 μm est inférieure à 10 % en poids.

5. Trifluorure de terre rare selon l'une des revendications 1 à 4 caractérisé par le fait que la fraction granulométrique supérieure à 2 μm est inférieure à 0,5 % en poids.

6. Trifluorure de terre rare selon l'un des revendications 1 à 5 caractérisé par le fait que l'indice de dispersion est compris entre 0,3 et 0,60.

7. Trifluorure de terre rare selon l'une des revendications précédentes, caractérisé en ce qu'il est un trifluorure de cérium, trifluorure de lanthane, trifluorure de néodyme ou trifluorure de dysprosium.

8. Procédé de préparation d'un trifluorure de terre rare tel que décrit dans l'une des revendications 1 à 7 caractérisé par le fait qu'il consiste à faire réagir une solution aqueuse d'un sel de terre rare III avec une solution de fluorure d'ammonium, dans des proportions telles que le rapport molaire $NH_4F$/sel de terre rare soit compris entre 3,0 et 3,6, à séparer le précipité formé, puis à le soumettre à un traitement thermique et enfin éventuellement, à une opération de désagglomération des agrégats.

9. Procédé selon la revendication 8 caractérisé par le fait que le sel de terre rare III est sous forme nitrate, chlorure et/ou sulfate.

10. Procédé selon la revendication 9 caractérisé par le fait que le sel de terre rare est un nitrate.

11. Procédé selon l'une des revendications 8 à 10 caractérisé par le fait que la concentration de la solution de terre rare exprimée en cation métallique est comprise entre 0,1 et 3 moles par litre.

12. Procédé selon l'une des revendications 8 à 11 caractérisé par le fait que la concentration de la solution de fluorure d'ammonium varie de 1 à 5 moles/litre.

13. Procédé selon l'une des revendications 8 à 13 caractérisé par le fait que la température réactionnelle est comprise entre 20 et 90°C.

14. Procédé selon la revendication 14 caractérisé par le fait que ladite température varie entre 60 et 90°C.

15. Procédé selon l'une des revendications 8 à 15 caractérisé par le fait que l'on ajoute progressivement la solution de fluorure d'ammonium dans la solution de sel de terre rare portée au préalable à la température réactionnelle ou inversement.

16. Procédé selon l'une des revendications 8 à 15 caractérisé par le fait que l'on ajoute progressivement la solution de fluorure d'ammonium dans la solution de sel de terre rare ou inversement et que l'on porte le mélange à la température réactionnelle.

17. Procédé selon l'une des revendications 8 à 17 caractérisé par le fait que la durée d'addition de la solution de fluorure d'ammonium varie entre 30 minutes et 2 heures.

18. Procédé selon l'une des revendications 8 à 18 caractérisé par le fait que l'on opère le mûrissement du précipité, en maintenant à la température réactionnelle choisie, le milieu réactionnel sous agitation.

19. Procédé selon l'une des revendications 8 à 19 caractérisé par le fait que l'on soumet le précipité séparé à une opération de lavage à l'eau suivie par une opération de séchage.

**20.** Procédé selon la revendication 20 caractérisé par le fait que la température de séchage varie entre la température ambiante et 250°C.

**21.** Procédé selon l'une des revendications 8 à 19 caractérisé par le fait que l'on soumet le précipité séparé à un traitement thermique effectué à une température comprise entre 250°C et 700°C.

**22.** Procédé selon la revendication 22 caractérisé par le fait que ladite température est comprise entre 400°C et 500°C.

**23.** Procédé selon l'une des revendications 22 à 23 caractérisé par le fait que l'on effectue au préalable une opération de séchage du précipité à une température variant entre la température ambiante et 250°C.

**24.** Procédé selon la revendication 8 caractérisé par le fait que l'opération de désagglomération est effectuée dans un microniseur à jet d'air.

**Patentansprüche**

**1.** Trifluorid eines Seltenerdmetalls, dadurch gekennzeichnet, daß es in Form von Aggregaten vorliegt, deren mittlerer Durchmesser kleiner als 1 μm ist, und daß es einen durch das Verhältnis $d_{84}$-$d_{16}$/$2d_{50}$ definierten Dispersionsindex besitzt, der kleiner oder gleich 0,8 ist.

**2.** Trifluorid eines Seltenerdmetalls nach Anspruch 1, dadurch gekennzeichnet, daß der mittlere Durchmesser der Aggregate zwischen 0,10 μm und 0,50 μm, vorzugsweise zwischen 0,15 μm und 0,30 μm, liegen kann.

**3.** Trifluorid eines Seltenerdmetalls nach einem der Ansprüche 1 und 2, dadurch gekennzeichnet, daß die Korngrößen der Aggregate zwischen 0,05 μm und 2,0 μm variieren.

**4.** Trifluorid eines Seltenerdmetalls nach einem der Ansprüche 1 bis 3, dadurch gekennzeichnet, daß der Anteil an Korngrößen über 1 μm weniger als 10 Gewichtsprozent beträgt.

**5.** Trifluorid eines Seltenerdmetalls nach einem der Ansprüche 1 bis 4, dadurch gekennzeichnet, daß der Anteil an Korngrößen über 2 μm weniger als 0,5 Gewichtsprozent beträgt.

**6.** Trifluorid eines Seltenerdmetalls nach einem der Ansprüche 1 bis 5, dadurch gekennzeichnet, daß der Dispersionsindex zwischen 0,3 und 0,60 liegt.

**7.** Trifluorid eines Seltenerdmetalls nach einem der vorhergehenden Ansprüche, dadurch gekennzeichnet, daß es sich um Certrifluorid, Lanthantrifluorid, Neodymtrifluorid oder Dysprosiumtrifluorid handelt.

**8.** Verfahren zur Herstellung eines Seltenerdmetalltrifluorids wie in einem der Ansprüche 1 bis 7 beschrieben, dadurch gekennzeichnet, daß es aus der Reaktion einer wässrigen Lösung eines Seltenerdmetall(III)-Salzes mit einer Ammoniumfluoridlösung in einem Mengenverhältnis entsprechend einem molaren Verhältnis $NH_4F$/Seltenerdmetall zwischen 3 und 3,6, der Abtrennung des gebildeten Niederschlags, einer anschließenden thermischen Behandlung und, eventuell, schlieblich einem Arbeitsgang der Desagglomeration der Aggregate besteht.

**9.** Verfahren nach Anspruch 8, dadurch gekennzeichnet, daß das Seltenerdmetall(III)-Salz als Nitrat, Chlorid und/oder Sulfat vorliegt.

**10.** Verfahren nach Anspruch 9, dadurch gekennzeichnet, daß das Seltenerdmetallsalz ein Nitrat ist.

**11.** Verfahren nach einem der Ansprüche 8 bis 10, dadurch gekennzeichnet, daß die Konzentration der Seltenerdmetallösung, bezogen auf das Metall-Kation, zwischen 0,1 und 3 mol pro Liter beträgt.

**12.** Verfahren nach einem der Ansprüche 8 bis 11, dadurch gekennzeichnet, daß die Konzentration der Ammoniumfluoridlösung zwischen 1 und 5 mol pro Liter liegen kann.

**13.** Verfahren nach einem der Ansprüche 8 bis 12, dadurch gekennzeichnet, daß die Reaktionstemperatur zwischen 20 und 90 °C liegt.

14. Verfahren nach Anspruch 13, dadurch gekennzeichnet, daß besagte Temperatur zwischen 60 und 90°C liegt.

15. Verfahren nach einem der Ansprüche 8 bis 14, dadurch gekennzeichnet, daß die Ammoniumfluoridlösung nach und nach zu der bereits vorher auf die Reaktionstemperatur erwärmten Seltenerdmetallösung gegeben wird beziehungsweise umgekehrt.

16. Verfahren nach einem der Ansprüche 8 bis 14, dadurch gekennzeichnet, daß die Ammoniumfluoridlösung nach und nach zu der Seltenerdmetallösung gegeben wird beziehungsweise umgekehrt und die Mischung auf die Reaktionstemperatur erwärmt wird.

17. Verfahren nach einem der Ansprüche 8 bis 16, dadurch gekennzeichnet, daß die Zugabe der Ammoniumfluoridlösung 30 Minuten bis 2 Stunden dauern kann.

18. Verfahren nach einem der Ansprüche 8 bis 17, dadurch gekennzeichnet, daß die Reifung des Niederschlags herbeigeführt wird, indem das Reaktionsmedium unter Rühren bei der gewählten Reaktionstemperatur gehalten wird.

19. Verfahren nach einem der Ansprüche 8 bis 18, dadurch gekennzeichnet, daß der abgetrennte Niederschlag mit Wasser gewaschen und anschließend getrocknet wird.

20. Verfahren nach Anspruch 19, dadurch gekennzeichnet, daß die Trocknungstemperatur zwischen Raumtemperatur und 250°C liegen kann.

21. Verfahren nach einem der Ansprüche 8 bis 18, dadurch gekennzeichnet, daß der abgetrennte Niederschlag einer thermischen Behandlung bei einer Temperatur zwischen 250°C und 700°C unterworfen wird.

22. Verfahren nach Anspruch 21, dadurch gekennzeichnet, daß besagte Temperatur zwischen 400°C und 500°C liegt.

23. Verfahren nach einem der Ansprüche 21 bis 22, dadurch gekennzeichnet, daß zuvor ein Trocknungsvorgang des Niederschlags bei einer Temperatur zwischen Raumtemperatur und 250°C durchgeführt wird.

24. Verfahren nach Anspruch 8, dadurch gekennzeichnet, daß der Arbeitsgang der Desagglomeration in einem Luftstrahlzerkleinerer durchgeführt wird.


## Claims

1. Rare earth trifluoride characterised by the fact that it is in the form of aggregates whose mean diameter is less than 1 $\mu$m and that it has a dispersion index, defined by the ratio $\dfrac{d_{84} - d_{16}}{2d_{50,}}$ less than or equal to 0.8.

2. Rare earth trifluoride according to Claim 1, characterised by the fact that the mean diameter of the aggregates varies between 0.10 $\mu$m and 0.50 $\mu$m, preferably between 0.15 $\mu$m and 0.30 $\mu$m.

3. Rare earth trifluoride according to one of Claims 1 and 2, characterised by the fact that the size of the aggregates ranges from 0.05 $\mu$m to 2.0 $\mu$m.

4. Rare earth trifluoride according to one of Claims 1 to 3, characterised by the fact that the fraction of particles greater than 1 $\mu$m is less than 10% by weight.

5. Rare earth trifluoride according to one of Claims 1 to 4, characterised by the fact that the fraction of particles greater than 2 $\mu$m is less than 0.5% by weight.

6. Rare earth trifluoride according to one of Claims 1 to 5, characterised by the fact that the dispersion index lies between 0.3 and 0.60.

7. Rare earth trifluoride according to one of the preceding Claims, characterised in that it is a cerium trifluoride, a lanthanum trifluoride, a neodymium trifluoride or a dysprosium trifluoride.

8. Process for preparing a rare earth trifluoride such as described in one of Claims 1 to 7, characterised by the fact that it consists in reacting an aqueous solution of a rare earth III salt with an ammonium fluoride solution in proportions such that the molar ratio $NH_4F$/rare earth salt lies between 3.0 and 3.6, in separating the precipitate formed, in then subjecting it to a heat treatment and finally, as an option, to a disaggregation operation of the aggregates.

9. Process according to Claim 8, characterised by the fact that the rare earth III salt is in the form of a nitrate, chloride and/or sulphate.

10. Process according to Claim 9, characterised by the fact that the rare earth salt is a nitrate.

11. Process according to one of Claims 8 to 10, characterised by the fact that the concentration of rare earth solution expressed in terms of the metal cation lies between 0.1 and 3 moles per litre.

12. Process according to one of Claims 8 to 11, characterised by the fact that the concentration of the ammonium fluoride solution varies between 1 and 5 moles/litre.

13. Process according to one of Claims 8 to 12, characterised by the fact that the reaction temperature lies between 20 and 90°C.

14. Process according to Claim 13, characterised by the fact that the said temperature varies between 60 and 90°C.

15. Process according to one of Claims 8 to 14, characterised by the fact that the ammonium fluoride solution is progressively added to the solution of rare earth salt, previously heated to the reaction temperature or conversely.

16. Process according to one of Claims 8 to 14, characterised by the fact that the ammonium fluoride solution is progressively added to the solution of rare earth salt or conversely and that the mixture is brought to the reaction temperature.

17. Process according to one of Claims 8 to 16, characterised by the fact that the time required for adding the ammonium fluoride solution varies between 30 minutes and 2 hours.

18. Process according to one of Claim 8 to 17, characterised by the fact that the ageing of the precipitate is carried out by keeping the reaction mixture under stirring at the selected reaction temperature.

19. Process according to one of Claims 8 to 18, characterised by the fact that the separated precipitate is subjected to an operation of washing in water followed by a drying operation.

20. Process according to Claim 19, characterised by the fact that the drying temperature varies between ambient temperature and 250°C.

21. Process according to one of Claims 8 to 18, characterised by the fact that the separated precipitate is subjected to a heat treatment carried out at a temperature lying between 250°C and 700°C.

22. Process according to Claim 21 characterised by the fact that the said temperature lies between 400°C and 500°C.

23. Process according to one of Claims 21 to 22, characterised by the fact that a drying operation is previously carried out on the precipitate at a temperature varying between ambient temperature and 250°C.

24. Process according to Claim 8, characterised by the fact that the disaggregation operation is carried out in an air jet micronizer.